# FASCICULE DE BREVET EUROPEEN

(11) **EP 0 896 850 B1**
(45) Date de publication et mention de la délivrance du brevet: **05.12.2001**
(21) Numéro de dépôt: 97401919.2
(22) Date de dépôt: 11.08.1997
(51) Int. Cl.: B23K 9/29

(54) **Système de montage d'électrode dans une torche de soudage**
Montagesystem für eine Elektrode in einem Schweissbrenner
Mounting system for an electrode in a welding torch

(43) Date de publication de la demande: 17.02.1999
(73) Titulaire: Fiducius Management Services Ltd., St. Peter Port, Guernsey GY1 2NN, Channel Islands (GB)
(72) Inventeur: Peyrot, Jean-Pierre, 91380 Chilly Mazarin (FR)
(74) Mandataire: Thibon-Littaye, Annick

(56) Documents cités:
- EP-A- 0 056 421
- US-A- 5 206 472
- US-A- 5 473 131

## Description

La présente invention concerne les appareils de soudage par arc électrique, dans la mesure où il s'agit là d'appareils qui demandent à pouvoir changer aisément les électrodes de soudage montées dans des torches de soudage, en fonction de leur usure ou de chaque contexte d'utilisation spécifique. Dans le même temps, il convient de préserver la qualité de l'alimentation électrique d'une telle électrode, ainsi que les conditions de circulation d'un gaz amené en fonctionnement au voisinage immédiat de la tête de soudage, où se situe la partie active de l'électrode. La circulation d'un gaz inerte est en particulier utilisée dans les torches de soudage de type TIG, pour prévenir l'oxydation de la soudure réalisée et maintenir une température favorable pendant l'opération de soudage.

Pour assurer les différentes fonctions nécessaires, les torches de soudage comportent, de manière classique, des moyens de montage spécifiques de l'électrode en tête d'un corps de torche, en matériau électriquement conducteur, généralement de nature métallique, ainsi qu'un diffuseur de gaz qui se fixe sur ledit corps, le tout étant enfermé dans une enveloppe isolante, généralement en matériau céramique, laquelle est terminée par une buse démontable.

Dans les systèmes courants actuels, l'électrode est montée suivant l'axe d'une pince porte-électrode, réalisée sous la forme d'un manchon fendu constituant mandrin (voir p. ex. US-A-5 473 131). Le serrage de cette pince sur l'électrode est assuré par coopération de son extrémité conique avec un cône femelle de réception, ménagé dans le diffuseur de gaz. Ce serrage de l'un vers l'autre axialement implique toute la longueur de la pince porte-électrode, car celle-ci est prévue en appui sur le diffuseur en son extrémité avant, et sur un fond du corps de torche en son extrémité arrière.

Dans certaines versions, c'est exclusivement le vissage du diffuseur dans le corps de torche qui pousse la pince en appui sur le fond du corps de torche, pour la fermer sur l'électrode et bloquer ainsi celle-ci. Dans d'autres versions, il est ajouté une vis pour presser la pince porte-électrode en son extrémité arrière à travers le fond du corps de torche, avec interposition d'un joint étanche évitant les fuites de gaz vers l'extérieur.

Dans tous les cas, on comprend que tout changement d'électrode, ou même seulement tout réglage de la position axiale d'une électrode en place, exige de la démonter complètement, par des opérations de dévissage et revissage du système de montage utilisé, pour la libérer temporairement de la prise de la pince porte-électrode. Il faut alors aussi démonter et remonter la buse en matériau non conducteur qui termine la tête de soudage, autour de la partie active de l'électrode dépassant du diffuseur de gaz, en s'assurant qu'il n'en reste aucune possibilité de fuite de courant électrique.

Un système permettant de s'affranchir de la pince porte-électrode des systèmes connus, en lui préférant des moyens de montage fixant et maintenant l'électrode qui restent à demeure en tête de la torche de soudage est connu du document EP-A-0 056 421, selon lequel l'électrode est maintenue serrée dans la pièce porte-électrode par des moyens élastiques. On évite ainsi d'avoir à démonter l'ensemble pour procéder à un changement d'électrode ou à un réglage de position axiale.

La présente invention a pour objet de proposer un système différent de montage d'une électrode dans une torche de soudage.

Par ses différentes caractéristiques, telles qu'elles seront décrites et revendiquées plus loin, l'invention permet aussi de mieux satisfaire que les systèmes antérieurs aux impératifs de la pratique, en regroupant en un même ensemble fonctionnel les organes utiles à la sécurité et à l'efficacité du soudage, relevant tout à la fois de la fixation de l'électrode, de son maintien en une position axiale réglable, de son alimentation en courant électrique et de l'alimentation de la buse terminale par une circulation de gaz en écoulement laminaire.

Pour satisfaire à ces objectifs et à d'autres qui ressortiront plus loin, l'invention propose un système de montage d'une électrode dans une torche de soudage comportant une pièce porte-électrode, fixe dans un corps support de diffuseur, dans laquelle est logée une bille mobile radialement et sollicitée élastiquement en appui radial sur l'électrode par une bague annulaire en pression élastique sur elle, qui est maintenue serrée axialement entre des portées formées respectivement par le corps de diffuseur et ladite pièce porte-électrode, autour d'un alésage axial de la pièce selon la revendication 1.

Ainsi conçus avec les éléments coopérants, le corps de diffuseur et la pièce porte-électrique constituent ensemble un système de montage d'une électrode en tête d'une torche de soudage à arc électrique particulièrement efficace et avantageux. L'invention a donc également pour objet une torche de soudage comportant des moyens de montage d'une électrode à travers un diffuseur de gaz au voisinage d'une buse terminant ladite torche tels qu'ils répondent aux mêmes caractéristiques.

Suivant d'autres caractéristiques de l'invention, lesdites portées formées respectivement par le diffuseur et la pièce porte-électrode ménagent entre elles, en des positions qui sont avantageusement écartées angulairement les unes des autres et régulièrement réparties autour de l'alésage axial recevant l'électrode, des passages de gaz qui sont aptes à assurer une circulation de gaz en contournement de la bague coopérant avec la bille d'appui radial sur l'électrode.

De tels passages sont utiles pour assurer la communication en ciculation gazeuse à partir de canaux de circulation de gaz en provenance d'une extrémité arrière du corps de diffuseur de manière à déboucher dans ladite buse. Ils sont de préférence ménagés longitudinalement entre la pièce porte-électrode et le corps du diffuseur. Préférentiellement, ils assurent ainsi la communication, du point de vue de la circulation gazeuse, entre de tels canaux et une chambre annulaire de répartition, également ménagée entre ledit corps de diffuseur et ladite pièce porte-électrode, de sorte à s'ouvrir sur un diffuseur de tranquillisation du flux gazeux dans la buse de la torche.

On comprend ainsi comment l'invention permet de combiner en un même système, aisé à mettre en oeuvre, les fonctions de montage de l'électrode en une position axiale, restant réglable, et celles qui sont liée aux besoins d'une alimentation en gaz d'inertage.

D'autres caractéristiques de l'invention visent plutôt des moyens avantageux pour regrouper dans le même système les fonctions précédentes avec d'autres concernant l'alimentation électrique, en un tout à fonctions multiples, étant entendu que toute combinaison opérante des moyens indiqués reste dans le cadre de l'invention.

Ainsi, il est notamment prévu de réaliser en un matériau bon conducteur de l'électricité, de préférence de nature métallique, tant le corps de diffuseur que la pièce porte-électrode, et il est aussi avantageusement prévu que la bille d'appui radial sur l'électrode ainsi que la bague coopérant avec elle pour assurer un effet de pression élastique sur l'électrode, soient réalisées en un matériau bon conducteur analogue, au moins aux endroits où ces différents éléments constitutifs du système de l'invention sont en contact mutuel en fonctionnement.

Encore d'autres caractéristiques de l'invention seront plus précisément décrites et revendiquées ci-après, telles qu'elles peuvent être avantageusement appliquées industriellement.

Elles consistent notamment en ce que, suivant toute combinaison opérante :
- En une position angulaire autre que celle de la bille d'appui sur l'électrode, la pièce porte-électrode présente une cavité de réception partielle d'une bille de maintien angulaire de ladite bague au niveau d'une fente qu'elle comporte pour assurer son élasticité.
- Ladite bague et la bille d'appui sur l'électrode sont réalisées en un matériau électriquement conducteur afin d'assurer l'alimentation électrique de l'électrode à partir du corps de diffuseur.
- La pièce porte-électrode est rendue solidaire du corps de diffuseur par sertissage sur sa face arrière dans une position où un épaulement antérieur qu'elle comporte vient en butée sur un épaulement coopérant du corps de diffuseur.
- Le corps de diffuseur est conformé de manière à coincer axialement, par une rondelle de retenue, des grilles de tranquillisation d'écoulement gazeux interposées en section transversale qui constituent le diffuseur proprement dit.
- La pièce porte-électrode et le corps de diffuseur présentent des moyens coopérants les uns avec les autres dans un positionnement axial des deux éléments l'un par rapport à l'autre et dans un positionnement axial de chacun par rapport aux autres organes d'une torche de soudage, sans gêner pour autant la circulation de gaz.
- Ils présentent des moyens de fixation (notamment par vissage) et de butée axiale par rapport à un tube d'alimentation électrique et gazeuse et à une buse terminale de la torche.
- Des épaulements appropriés sont prévus sur le corps de diffuseur et sur un tube creux du corps de la torche pour comprimer un joint isolant électrique et étanche aux gaz fermant une enveloppe isolante de la torche avec la buse terminale.

L'invention sera maintenant plus complètement décrite dans le cadre de caractéristiques préférées et de leurs avantages, en faisant référence aux figures des dessins annexés qui les illustrent et dans lesquelles :
- la figure 1 représente schématiquement une torche suivant l'invention dans une vue générale en coupe longitudinale ;
- la figure 2 montre avec plus de précision le système de montage de l'électrode en tête de la torche, en coupe longitudinale partielle ;
- la figure 3 montre le même système, vu en coupe transversale partielle ;
- les figures 4 et 5 sont des vues partielles en section transversale, montrant le système vers l'avant et de l'arrière respectivement.

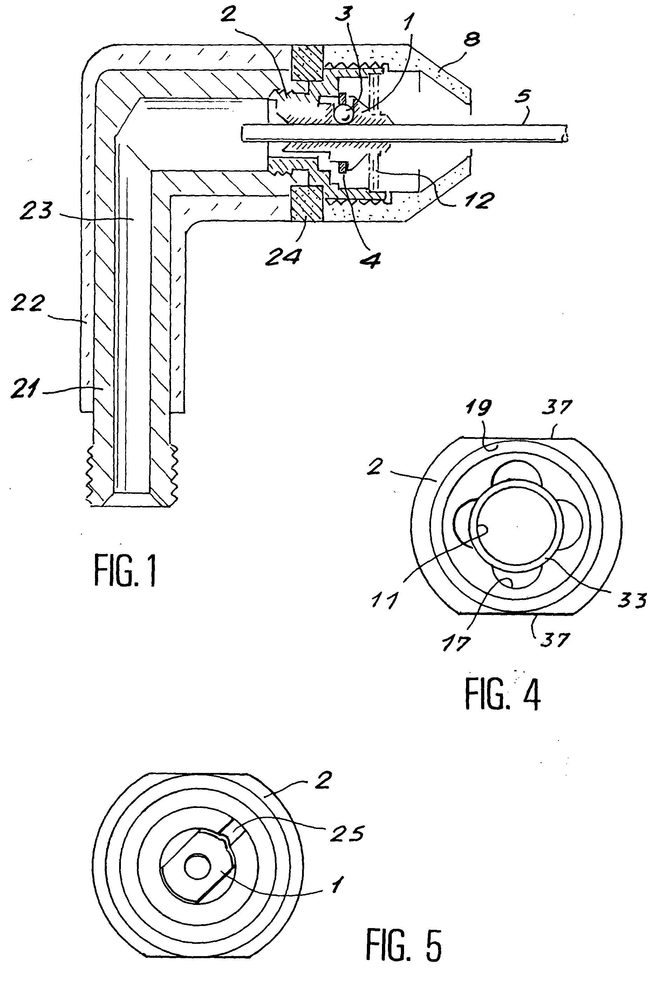

Sur la vue d'ensemble de la torche de l'invention conformément à la figure 1, on peut observer une forme globale simplifiée par rapport aux torches actuelles, du fait qu'il n'est plus besoin d'assurer une butée de l'électrode sur un fond du corps de torche lui-même.

Le corps de torche est constitué par un tube creux 21, conformé suivant un coude à angle droit. Il est réalisé en un matériau conducteur de l'électricité, généralement de nature métallique, et enfermé dans une enveloppe isolante 22. Il est ainsi conçu pour assurer l'alimentation en courant électrique nécessaire à la création à d'un arc de soudage en bout d'une électrode 5, qui se monte à volonté en tête de la torche. D'autre part, il est de section annulaire, autour d'un conduit central 23, par lequel s'effectue simultanément une alimentation en gaz d'inertage.

Les éléments essentiels réalisés conformément à la présente invention se situent en tête de la torche, là où l'électrode 5 se monte axialement à l'intérieur d'une buse 8 terminant la torche et à travers un diffuseur de gaz 12.

On voit aussi sur la figure 1 qu'en bout du corps de torche 21, il est monté intérieurement une pièce 2, constituant corps de diffuseur par le fait qu'elle supporte le diffuseur proprement dit 12, interposé en travers de la buse 8, suivant une section droite, annulairement autour de l'électrode 5.

La buse 8 est constituée en un matériau céramique, adapté pour être à la fois non conducteur de l'électricité et apte à supporter les températures élevées qu'engendre le soudage.

Elle est fixée par vissage sur le corps de diffuseur 2, jusqu'à comprimer un joint annulaire 24 qui est interposé entre elle et le corps de diffuseur 2 d'une part, et entre le corps de torche 21 et son enveloppe isolante 22 d'autre part, sans gêner pour autant le contact électrique entre le corps de torche 21 et le corps de diffuseur 2.

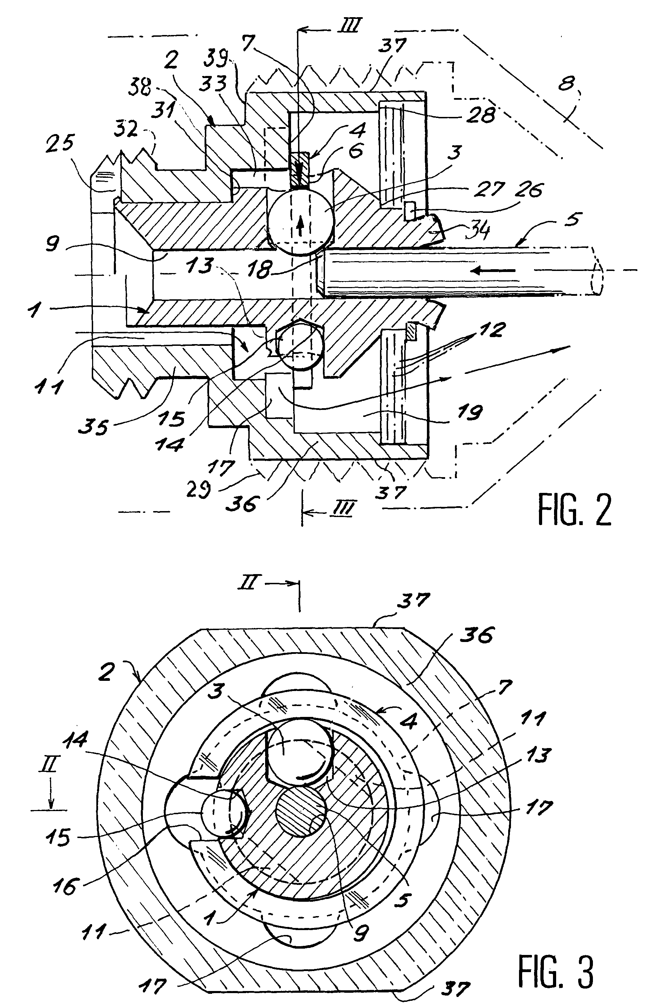

Pour décrire plus avant le système de montage d'électrode suivant l'invention, il est maintenant nécessaire de se reporter aux figures 2 et 3, qui montrent mieux une pièce porte-électrode 1, immobilisée à demeure dans le corps de diffuseur 2. On y voit en particulier que cette pièce porte-électrode 1, qui est percée d'un alésage axial 9 recevant l'électrode 5, est fixée sur le corps de diffuseur 2 tant à l'avant qu'à l'arrière.

Plus précisément, elle est rendue solidaire du corps du diffuseur, d'une part par sertissage sur la face arrière de ce corps 2, en un point formant clavette dans une rainure 25 de ce dernier (voir également figure 5), et d'autre part, plus à l'avant et en direction opposée, par un épaulement venant en appui sur un épaulement coopérant interne 31 du corps de diffuseur.

Des grilles empilées constituent le diffuseur 12 proprement dit, destiné à assurer la tranquillisation de l'écoulement gazeux amené jusqu'à la buse. En périphérie, ces grilles sont empilées contre un épaulement interne 28 ménagé à cet effet dans le corps de diffuseur 2. Au centre du système, elles sont bloquées axialement contre un épaulement 27 de la pièce porte-électrode 1 par une rondelle 26, retenue fixe au centre de cette pièce par une opération de déformation ponctuelle de celle-ci, en 34. Cette déformation affecte sa matière seulement en son extrémité terminale antérieure. Elle est réalisée avant toute mise en place d'une électrode 5.

On observe de la figure 2 que dans le même temps, la déformation à laquelle il est procédé a pour effet d'évaser l'alésage axial 9 de l'intérieur vers l'extérieur. Il en résulte une conicité de centrage qui assure un guidage favorable de l'électrode 5 lors de son introduction.

En partie médiane du système incorporant la pièce porte-électrode 1 avec le corps de diffuseur 2, une bague annulaire 4 est disposée autour de la pièce 1, dans le même plan de section transversale que celui où se situent deux billes 3 et 15 logées dans cette pièce.

Les deux billes 3 et 15 coopèrent avec la bague 4, mais dans des fonctions totalement différentes. La première tient sa fonction du fait que la bague 4 est capable de se déformer élastiquement dans le sens radial, alors que la seconde sert à immobiliser la bague 4 dans son positionnement autour de la pièce porte-électrode 1.

La bague 4 est en effet fendue, ce qui lui permet de voir son diamètre varier par ouverture ou fermeture de la fente radiale 16 qu'elle comporte. C'est au niveau de cette fente que se situe la bille 15, emprisonnée dans une cavité à fond borgne 14 de la pièce 1, qui ne la reçoit que partiellement, de sorte qu'elle dépasse du diamètre externe de la pièce 1 et pénètre partiellement dans la fente 16 de la bague 4.

Au contraire, la bille 3 est mobile dans une cavité 13 qui traverse radialement toute l'épaisseur de la pièce. En conséquence, la pression élastique qu'exerce sur elle la bague 4 tend à la pousser vers l'axe de l'alésage interne 9. Si l'électrode 5 s'y trouve, la bille 3 est ainsi sollicitée élastiquement en appui radial sur cette électrode, ce qui assure le bloquage de cette dernière en position axiale. Mais aussi, l'électrode 5 peut aisément être introduite de l'extérieur jusqu'à la position désirée dans l'alésage de réception 9, en repoussant la bille 3 en sens inverse de la pression élastique. Pour faciliter encore son introduction au passage de la bille 3, l'électrode 5 présente une tête biseautée 18.

Par leurs surfaces périphériques en regard l'une de l'autre, la pièce porte-électrode 1 et le corps de diffuseur 2 coopèrent en vue de maintenir la bague 4 dans sa position axiale correcte en action sur la bille 3, tout en réservant la place nécessaire pour que le gaz amené de l'arrière de la torche puisse librement circuler jusqu'à une chambre annulaire de répartition 19 s'ouvrant sur le diffuseur 12.

A l'avant du plan transversal des billes 3 et 15, la pièce 1 forme par un épaulement une portée annulaire 6, qui vient en appui sur environ la moitié de l'épaisseur radiale de la bague 4, en sa partie interne. De l'autre côté, à l'arrière du même plan transversal, l'épaulement limitrophe de la chambre 19 forme sur le corps de diffuseur 2 une portée annulaire 7 qui, elle, vient en appui sur la partie externe complémentaire de la bague 4. La bague 4 se trouve ainsi serrée axialement entre les deux portées 6 et 7 sans que sa déformation élastique radiale soit pour autant gênée.

La portée 6 prévue sur la pièce porte-électrode 1 est seulement interrompue au niveau des cavités dans lesquelles se logent les billes 3 et 15. Ces deux cavités se situent sur des rayons décalés angulairement l'un de l'autre de 90 degrés d'angle, pour des raisons de solidité de la construction mécanique.

Vers l'arrière du système par rapport à l'épaulement 31 déjà mentionné, les deux éléments que constituent la pièce porte-électrode 1 et le corps de diffuseur 2 sont de même diamètre, sans jeu l'un dans l'autre, sauf pour deux canaux de circulation de gaz 11, ménagés par deux méplats diamétralement opposés formés sur la pièce 1. Ces canaux assurent l'alimentation en gaz de la torche. Il assurent la communication entre le tube creux 21 et un intervalle annulaire 33 séparant les parois respectives en regard des deux éléments, entre l'épaulement 31 du corps de diffuseur 2 et une face radiale 13 de la pièce porte-électrode.

De là, à travers la portée d'appui 7 pour la bague 4, le gaz parvient à la chambre 19 précédant le diffuseur 12 en contournant la bague 4, grâce à quatre passages 17 qui sont creusés dans la masse du corps de diffuseur 2. La présence de ces passages de gaz interrompt d'autant la portée 7 sur laquelle la partie périphérique externe de la bague 4 prend appui, mais ce sur une ouverture angulaire réduite qui ne perturbe pas la fonction de cette dernière.

Les quatre passages 17 sont répartis en des positions angulairement espacées les unes des autres de 90 degrés comme il apparait sur la coupe de la figure 3.

Par contre, là en variante de la figure 3, il est avantageux que les passages de gaz 17 soient décalés de 45 degrés par rapport aux rayons occupés par les billes 3 et 15, afin d'éviter une action directe du flux gazeux sur ces billes.

Si l'on s'intéresse maintenant à la forme extérieure du système de montage de l'électrode suivant l'invention, on observe, notamment de la figure 2, ainsi que des coupes partielles des figures 3 et 4, que le corps de diffuseur 2 forme deux épaulements externes successifs entre une partie postérieure 35 de plus faible section et une partie antérieure 36 de plus large section.

La partie postérieure 35 sert au montage du système dans le corps de torche, en liaison avec le tube 21 du point de vue de l'alimentation électrique et gazeuse. Elle présente un filetage externe 32 qui se visse dans l'extrémité du corps de torche alors que ce dernier s'étend jusqu'à buter contre un épaulement extérieur 38 du corps 2.

Le joint 24 de la figure 1 se plaque à cheval sur le corps de torche 21 et le corps de diffuseur 2, contre la paroi longitudinale comprise entre l'épaulement 38 et un autre épaulement 39, délimitant vers l'arrière de la torche la partie antérieure 36 du système de montage d'électrode.

Sur cette partie antérieure 36, il est formé un autre filetage externe 29, sur lequel vient se visser la buse 8. Ce filetage est interrompu suivant deux méplats 37 (figure 3) qui facilitent la préhension du système lors de son vissage à l'extrémité du corps de torche.

Au total, une torche de soudage à l'arc conforme à l'invention, conçue comme il vient d'être décrit, permet d'assurer le montage de l'électrode en tête de la torche par un système combinant, en un ensemble fixe et compact, tous les moyens nécessaires pour assurer, non seulement la fixation de l'électrode en une position axialement réglable, mais aussi la circulation et la diffusion du gaz d'inertage, ainsi que l'alimentation électrique de l'électrode par l'intermédiaire du corps de diffuseur 2, de la bague 4 et de la bille 3, tous réalisés à cet effet en un matériau conducteur, de préférence de nature métallique.

## Revendications

1. Système de montage d'une électrode dans une torche de soudage, comportant une pièce porte-électrode (1), fixe dans un or support de diffuseur (2), **caractérisé en ce que** dans ladite pièce porte-électrode est logée une bille (3) mobile radialement et sollicitée élastiquement en appui radial sur l'électrode (5) par une bague annulaire (4) en pression élastique sur elle, ladite bague étant maintenue serrée axialement entre des portées (7, 6) formées respectivement par ledit corps support de diffuseur et ladite pièce porte-électrode autour d'un alésage axial (9) de la pièce porte-électrode recevant ladite électrode.

2. Système suivant la revendication 1, **caractérisé en ce que** lesdites portées formées respectivement par ledit corps de diffuseur (2) et la pièce porte-électrode (1) ménagent des passages de gaz (17) en contournement de ladite bague (4) en communication avec des canaux d'alimentation en gaz (11) vers une chambre (19) s'ouvrant par l'intermédiaire d'un diffuseur (12) dans une buse (8) terminant une torche de soudage à une extrémité avant du corps de diffuseur (2).

3. Système suivant la revendication 1 ou 2, **caractérisé par le fait qu'**en une position angulaire autre que celle de ladite bille (3) d'appui sur l'électrode, ladite pièce porte-électrode (1) présente une cavité (14) de réception partielle d'une bille (15) de maintien angulaire de ladite bague (4) au niveau d'une fente (16) qu'elle comporte pour assurer son élasticité.

4. Système selon l'une quelconque des revendications précédentes, **caractérisé en ce que** ladite bague (4) et ladite bille (3) d'appui sur l'électrode sont réalisées en un matériau électriquement conducteur afin d'assurer l'alimentation électrique de l'électrode (5) à travers le corps de diffuseur (2) à partir d'un tube creux (21) d'un corps de torche équipé dudit système.

5. Système suivant l'une quelconque des revendications précédentes, **caractérisé en ce que** ladite pièce porte-électrode (1) est rendue solidaire du corps de diffuseur (2) par sertissage sur la face arrière du corps du diffuseur et par butée en sens opposé sur un épaulement (31) de ce dernier.

6. Système selon l'une quelconque des revendications précédentes, **caractérisé en ce qu'**il comporte, interposées en section transversale dudit corps de diffuseur (2), des grilles (12) de tranquillisation d'écoulement gazeux, qui sont retenues contre des épaulements respectifs du corps de diffuseur et de ladite pièce porte-électrode, au moyen d'une rondelle centrale (26), fixe sur ladite pièce (1).

7. Torche de soudage comportant un système de montage d'électrode selon l'une quelconque des revendications précédentes, **caractérisée en ce que** le corps de diffuseur (2) forme extérieurement une partie postérieure (35) de fixation par vissage dans un tube (21) d'alimentation électrique et gazeuse de la torche et une partie antérieure (36) de fixation d'une buse (8) terminant la torche.

8. Torche selon la revendication 7, **caractérisée en ce que** ladite partie antérieure (36) du corps du diffuseur présente des méplats facilitant sa préhension pour le vissage de sa partie postérieure dans la torche.

9. Torche suivant la revendication 7 ou 8, **caractérisée en ce que** lesdites passages de gaz (17) suivant la revendication 2 sont au nombre de quatre, disposées en des positions radiales à 90 degrés l'une de l'autre.

10. Torche selon la revendication 9, **caractérisée en ce que** pour la circulation du gaz, ladite pièce porte-électrode (1) présente, à l'arrière de ladite bille (3) de pression sur l'électrode, deux méplats diamétralement opposés ménageant deux canaux longitudinaux (11) de circulation gazeuse.

11. Torche selon la revendication 9 ou 10, **caractérisée en ce que** la bille (3) d'appui sur l'électrode et la bille (15) de retenue angulaire de ladite bague (4) sont partiellement reçues dans des logements ménagés dans la pièce porte-électrode, en des positions à 90 degrés l'une de l'autre.

## Claims

1. System for fitting an electrode in a welding torch, comprising an electrode-holder part (1), which is fixed in a distributor support body (2), **characterised in that** in the said electrode-holder part there is accommodated a ball (3), which is mobile radially and is thrust resiliently such as to be supported radially on the electrode (5) by an annular ring (4) which is pressed resiliently on to it, the said ring being maintained clamped axially between support surfaces (7, 6), which are formed respectively by the said distributor support body and the said electrode-holder part, around an axial bore (9) in the electrode-holder part which receives the said electrode.

2. System according to claim 1, **characterised in that** the said support surfaces which are formed respectively by the said distributor body (2) and the electrode-holder part (1) provide gas passages (17) which surround the said ring (4), in communication with gas supply channels (11), towards a chamber (19) which is opened through the intermediary of a distributor (12) in a nozzle (8) which forms the end of a welding torch, at a front end of the distributor body (2).

3. System according to claim 1 or claim 2, **characterised in that** in an angular position other than that in which the said ball (3) is supported on the electrode, the said electrode-holder part (1) has a cavity (14) for partial reception of a ball (15) for angular maintenance of the said ring (4) at the level of a slot (16) which it contains in order to assure its resilience.

4. System according to any one of the preceding claims, **characterised in that** the said ring (4) and the said ball (3) which is supported on the electrode are made of an electrically conductive material, in order to assure the electrical supply to the electrode (5), via the distributor body (2), from a hollow tube (21) of a torch body which is equipped with the said system.

5. System according to any one of the preceding claims, **characterised in that** the said electrode-holder part (1) is rendered integral with the distributor body (2) by being crimped onto the rear surface of the distributor body, and by abutting in the opposite direction a shoulder (31) of the latter.

6. System according to any one of the preceding claims, **characterised in that**, interposed in transverse cross-section of the said distributor body (2), it comprises grids (12) for tranquillisation of the flow of gas, which are retained against respective shoulders of the distributor body and of the said electrode-holder part, by means of a central washer (26), which is secured onto the said part (1) .

7. Welding torch comprising a system according to any one of the preceding claims for fitting an electrode, **characterised in that** the distributor body (2) forms on the exterior a rear part (35) for securing by screwing into a pipe (21) for the electrical and gas supply of the torch, and a rear part (36) for securing a nozzle (8) which forms the end of the torch.

8. Torch according to claim 7, **characterised in that** the said rear part (36) of the distributor has flattened parts which facilitate grasping of it, in order to screw its rear part into the torch.

9. Torch according to claim 7 or claim 8, **characterised in that** there are four of the said gas passages (17) according to claim 2, disposed in radial positions at 90° to one another.

10. Torch according to claim 9, **characterised in that**, for the circulation of the gas, the said electrode-holder part (1) has, to the rear of the said ball (3) for pressure on the electrode, two diametrically opposite flattened parts, which provide two longitudinal channels (11) for circulation of gas.

11. Torch according to claim 9 or claim 10, **characterised in that** the ball (3) for support on the electrode, and the ball (15) for angular retention of the said ring (4), are partially received in receptacles which are provided in the electrode-holder part, in positions at 90° to one another.

## Patentansprüche

1. Montagesystem für eine Elektrode in einem Schweißbrenner mit einem in einem Diffusorhaltekörper (2) befestigten elektrode-tragenden Teil (1), **dadurch gekennzeichnet, dass** in dem besagten elektro-tragenden Teil eine radial bewegliche und elastisch durch einen Ring (4) unter radialem Druck auf der Elektrode (5) aufliegenden Kugel (3) gelagert ist, wobei der besagte Ring axial zwischen jeweils von dem besagten Haltekörper des Diffusors gebildeten Bereichen (7, 6) eingeklemmt gehalten wird und wobei das besagte elektrode-tragenden Teil die besagte Elektrode um eine axiale Bohrung (9) des elektrode-tragenden Teils aufnimmt.

2. System nach Anspruch 1, **dadurch gekennzeichnet, dass** die besagten jeweils von dem besagten Diffüsorkörper (2) und dem elektrode-tragenden Teil (1) gebildeten Bereiche Gasdurchlässe (17) unter Umgehung des besagten Ringes (4) erzeugen, welche mit Gaszuführungskanälen (11) zu einerKammer (19) in Verbindung sind, die sich über einen Diffusor (12) der in einer in einem Schweißbrenner auf einem vorderen Ende des Diffüsorkörpers endenden Düse (8) öffnet.

3. System nach Anspruch 1 oder 2, durch die Tatasache **gekennzeichnet, dass** in einer anderen Winkelstellung als der der besagten Kugel (3) welche auf der Elektrode aufliegt, das besagte elektrode-tragende Teil (1) einen Halbaufnahmehohlraum (14) für eine Winkelhaltekugel (15) des besagten Ringes (4) auf Höhe eines für seine Elastizität nötigen Schlitzes (16) aufweist.

4. System nach einem irgendeinem der vorangehenden Ansprüche, **dadurch gekennzeichnet, dass** der besagte Ring (4) und die besagte Kugel (3) , welche auf der Elektrode aufliegt, aus elektrisch leitendem Material hergestellt sind, um die elektrische Stromversorgung der Elektrode (5) über den Diffusorkörper (2) ausgehend von einem hohlen Rohr (21) eines mit dem besagten System ausgerüsteten Brennerkörpers zu gewährleisten.

5. System nach einem irgendeinem der vorangehenden Ansprüche, **dadurch gekennzeichnet, dass** das besagte elektrode-tragende Teil (1) mit dem Diffüsorkörper (2) durch Crimpen einstückig auf der Hinterseite des Diffüsorkörpers und durch Anschlag gegen eine Schulter (31) in entgegengesetzte Richtung dieses letzten gestaltet worden ist.

6. System nach einem irgendeinem der vorangehenden Ansprüche , **dadurch gekennzeichnet, dass** es im Querschnitt des Diffusorkörpers (2) eingelagerte Gasflussberuhigungsgitter (12) aufweist, die gegen jeweilige Schultern des Diffusorkörpers und des besagten elektrode-haltenden Teils mit Hilfe eines auf dem besagten Teil (1) befestigten Zentralringes (26) zurückgehalten werden.

7. Ein ein System nach irgendeinem der vorangehenden Ansprüche aufweisender Schweißbrenner, **dadurch gekennzeichnet, dass** der Diffusorkörper (2) aussen einen hinteren Teil (35), welcher mit Hilfe von Schrauben in einem Strom- und Gasversorgungsrohr (21) befestigt ist, und einen vorderen Befestigungsteil (36) eines in einer Düse (8) endenden Brenners bildet.

8. Brenner nach Anspruch 7, **dadurch gekennzeichnet, dass** der besagte vordere Teil (36) des Diffusorkörpers Halbflächen aufweist, die sein Greifen durch Schrauben seines hinteren Teils in dem Brenner erleichtern.

9. Brenner nach Anspruch 7 oder 8, **dadurch gekennzeichnet, dass** die besagten Gasdurchlässe nach Anspruch 2 sich auf vier belaufen und in radialen Stellungen mit 90° zueinander angeordnet sind.

10. Brenner nach Anspruch 9, dass für das Strömen des Gases das besagte elektrode-tragende Teil (1) auf der Rückseite der besagten Kugel (3), welche Druck auf die Elektrode ausübt, zwei diametral gegenüberliegende Halbflächen angeordnet sind, welche zwei Längskanäle (11) für das Strömen des Gases aussparen.

11. Brenner nach Anspruch 9 oder 10, **dadurch gekennzeichnet, dass** die auf der Elektrode aufliegende Kugel (3) und die Winkelrückhaltekugel (15) des besagten Ringes (4) teilweise in den Lagern aufgenommen werden, welche in dem elektrode-tragenden Teil in 90°-Stellungen zueinander eingearbeitet sind.
